(19)

**Europäisches Patentamt**
**European Patent Office**
**Office européen des brevets**

(11) **EP 4 509 318 A1**

(12) **EUROPEAN PATENT APPLICATION**

(43) Date of publication:
**19.02.2025 Bulletin 2025/08**

(21) Application number: **24193223.5**

(22) Date of filing: **06.08.2024**

(51) International Patent Classification (IPC):
***B41J 2/165*** (2006.01)

(52) Cooperative Patent Classification (CPC):
**B41J 2/16538; B41J 2/16508; B41J 2/16535;**
**B41J 2/16544;** B41J 2/16585; B41J 2002/16558

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **18.08.2023 JP 2023133419**

(71) Applicant: **Brother Kogyo Kabushiki Kaisha**
**Nagoya, Aichi 467-8561 (JP)**

(72) Inventors:
• **OGAWA, Mikio**
  **Nagoya, 467-8562 (JP)**
• **TANAKA, Hiroyuki**
  **Nagoya, 467-8562 (JP)**
• **KATO, Ryuji**
  **Nagoya, 467-8562 (JP)**

(74) Representative: **Prüfer & Partner mbB**
**Patentanwälte · Rechtsanwälte**
**Sohnckestraße 12**
**81479 München (DE)**

(54) **LIQUID DISCHARGE APPARATUS AND WIPING METHOD**

(57)   A liquid discharge apparatus (10) includes: a head (34) having a nozzle surface (33A) in which a nozzle (33) is opened; a wiper (72) configured to come into contact with the nozzle surface and move relative to the head; and a controller (130). The controller is configured to execute: a viscosity determination process of determining viscosity of liquid adhering to the nozzle surface; and a wiping process in which the wiper comes into contact with the nozzle surface and moves relative to the head. In a case in which the determined viscosity is lower than first viscosity indicating that the liquid is substantially solidified, a pressing pressure when the wiper comes into contact with the nozzle surface in the wiping process is set to be larger than a stress due to viscous friction of the liquid on the nozzle surface.

*FIG.3*

**Description**

REFERENCE TO RELATED APPLICATIONS

This application claims priority from Japanese Patent Application No. 2023-133419 filed on August 18, 2023. The entire contents of these priority applications are incorporated herein by reference.

BACKGROUND ART

In an image forming apparatus according to a related art, for example, a degree of dryness of a nozzle of a head is obtained based on a dot size of ink discharged from the nozzle during final discharge and a non-discharge time from the final discharge, and necessity of preliminary discharge of ink from the head is determined.

Ink adhering to a nozzle surface of the head by purging or the like is wiped off by a wiping process using a wiper. However, when moisture evaporates from the ink adhering to the nozzle surface, viscosity and surface tension of the ink change. A pressing pressure of the wiper against the nozzle surface and a moving speed of the wiper may also affect wiping of the ink. For this reason, it may be difficult to set optimum conditions of the wiping process.

SUMMARY

A liquid discharge apparatus according to one aspect of the present disclosure includes: a head having a nozzle surface in which a nozzle is opened; a wiper configured to come into contact with the nozzle surface and move relative to the head; and a controller. The controller is configured to execute: a viscosity determination process of determining viscosity of liquid adhering to the nozzle surface; and a wiping process in which the wiper comes into contact with the nozzle surface and moves relative to the head. In a case in which the determined viscosity is lower than first viscosity indicating that the liquid is substantially solidified, a pressing pressure when the wiper comes into contact with the nozzle surface in the wiping process is set to be larger than a stress due to viscous friction of the liquid on the nozzle surface.

Even if moisture evaporates from the liquid adhering to the nozzle surface and part of the liquid is solidified, the liquid can be wiped from the nozzle surface by the wiper.

A wiping method according to one aspect of the present disclosure includes determining viscosity of liquid adhering to a nozzle surface of a head; and wiping the liquid adhering to the nozzle surface by a wiper that comes into contact with the nozzle surface and moves relative to the head. In a case in which the determined viscosity is lower than first viscosity indicating that the liquid is substantially solidified, a pressing pressure when the wiper comes into contact with the nozzle surface in wiping is larger than a stress due to viscous friction of the liquid on the nozzle surface..

Even if moisture evaporates from the liquid adhering to the nozzle surface and part of the liquid is solidified, the liquid can be wiped from the nozzle surface by the wiper.

According to a wiping method of one aspect of the present disclosure, includes wiping liquid adhering to a nozzle surface of a head with a wiper that comes into contact with the nozzle surface. The liquid comprises a pigment and a water-soluble organic solvent, having a mass ratio of the water-soluble organic solvent to a solid component in the liquid (water-soluble organic solvent/solid) of 2.0 or more. The water-soluble organic solvent has a saturated vapor pressure of 20 Pa or less at 20°C. When an aqueous solution having a content of the solid component of 10 wt% is prepared, conductivity of the aqueous solution is 5 mS/cm or less,. A pressing pressure when the wiper comes into contact with the nozzle surface in wiping is larger than a stress due to viscous friction of the liquid. Viscosity of the liquid on the nozzle surface is less than first viscosity indicating that the liquid is substantially solidified.

Even if moisture evaporates from the liquid adhering to the nozzle surface and part of the liquid is solidified, the liquid can be wiped from the nozzle surface by the wiper.

According to the present disclosure, optimum wiping conditions are determined.

BRIEF DESCRIPTION OF DRAWINGS

A more complete appreciation of the disclosure and many of the attendant advantages thereof will be readily obtained as the same becomes better understood by reference to the following detailed description when considered in connection with the accompanying drawings.

FIG. 1 is a perspective view of a printer 10.
FIG. 2 is a schematic diagram showing an internal configuration of the printer 10.
FIG. 3 is a schematic diagram showing a print head 34, a cap 71, a wiper 72, and a wet wiper 76.
FIG. 4 is a functional block diagram of the printer 10.
FIG. 5 is a flowchart showing a determination process.

FIG. 6 is a flowchart showing an estimation process.

FIG. 7 is a schematic diagram showing a state in which a wiper blade 73 is in contact with a solid ink droplet adhering to a nozzle surface 33A.

FIG. 8 is a schematic diagram showing a state in which the wiper blade 73 is in contact with a liquid ink droplet adhering to the nozzle surface 33A.

DESCRIPTION

As used herein, the words "a" and "an" and the like carry the meaning of "one or more." When an amount, concentration, or other value or parameter is given as a range, and/or its description includes a list of upper and lower values, this is to be understood as specifically disclosing all integers and fractions within the given range, and all ranges formed from any pair of any upper and lower values, regardless of whether subranges are separately disclosed. Where a range of numerical values is recited herein, unless otherwise stated, the range is intended to include the endpoints thereof, as well as all integers and fractions within the range. As an example, a stated range of 1-10 fully describes and includes the independent subrange 3.4 - 7.2 as does the following list of values: 1, 4, 6, 10.

Hereinafter, a printer 10 according to an embodiment of the present disclosure will be described in detail. The following embodiment is merely an example of the present disclosure, and it is needless to say that the embodiment can be appropriately modified without departing from the gist of the present disclosure.

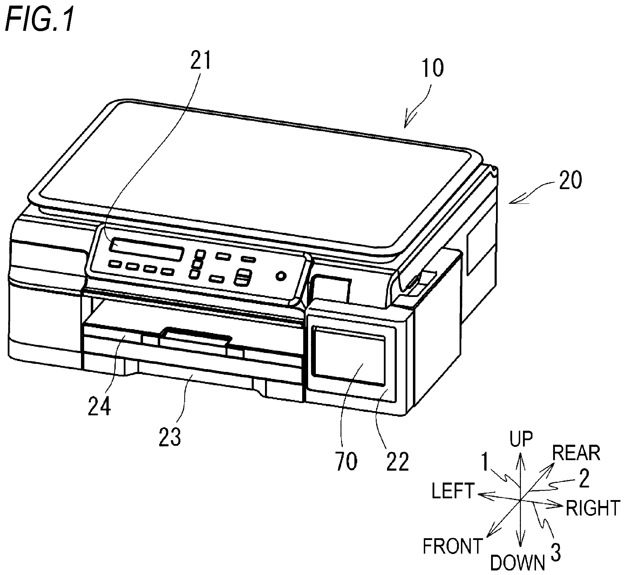

In the embodiment, advancement from a start point to an end point of an arrow is expressed as orientation, and movement on a line connecting the start point and the end point of the arrow is expressed as direction. An up-down direction 1 is defined with reference to a state in which the printer 10 is installed to be usable (a state of FIG. 1). In the printer 10, a direction in which a sheet feeder tray 23 is pulled out is defined as a front direction, and a front-rear direction 2 is defined. A left-right direction 3 is defined when the printer 10 is viewed from a front side.

External Configuration of Printer 10

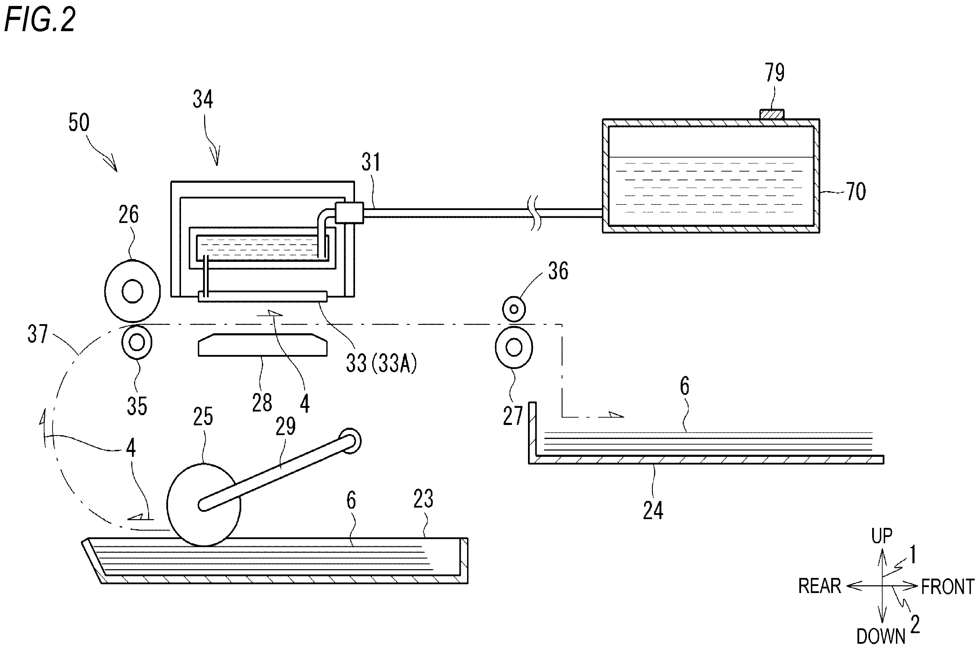

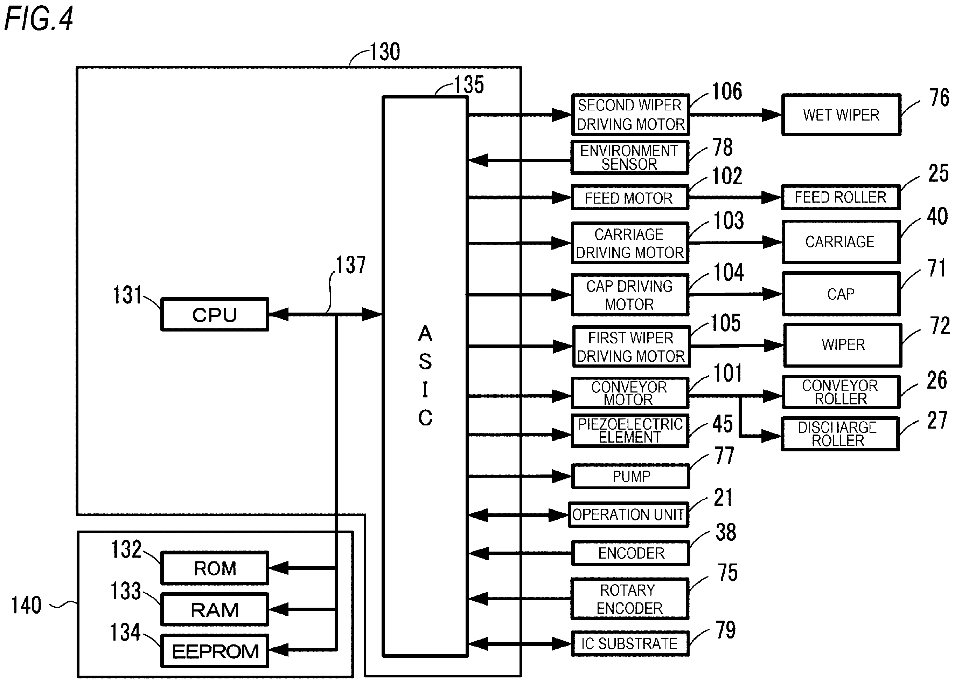

As shown in FIGS. 1 and 4, the printer 10 (an example of a liquid discharge apparatus) includes a housing 20, an operation unit 21 held by the housing 20, a cover 22, the sheet feeder tray 23, a sheet discharging tray 24, a controller 130, and a memory 140. The printer 10 records an image on a sheet 6 (see FIG. 2).

The sheet 6 may be a recording medium cut into a prescribed size, may be pulled out from a roll wound in a cylindrical shape, and may be a fanfold sheet.

The operation unit 21 includes a display and a plurality of operation switches. The operation unit 21 receives a user operation. The operation unit 21 may be a touch panel. The operation unit 21 is an example of a notification device.

As shown in FIG. 1, the sheet feeder tray 23 is located at a lower portion of the housing 20. The sheet discharging tray 24 is located above the sheet feeder tray 23 at the lower portion of the housing 20. The cover 22 is located at a right portion of a front surface of the housing 20. The cover 22 is provided at a lower end and is pivotable relative to the housing 20. When the cover 22 is opened, a cartridge 70 that stores ink is accessible.

In the present embodiment, the cartridge 70 is not limited to a cartridge that stores ink of one color such as black, and may include, for example, four cartridges 70 that store ink of four colors including black, yellow, cyan, and magenta, respectively. As shown in FIG. 2, an IC substrate 79 is mounted on the cartridge, and stores liquid information for specifying a type of ink stored in the cartridge 70.

Print Engine 50

As shown in FIG. 2, the housing 20 holds a print engine 50 therein. The print engine 50 mainly includes a feed roller 25, a conveyor roller 26, a discharge roller 27, a platen 28, and a print head 34 (an example of a head). The feed roller 25 is rotatably supported by an arm 29. The arm 29 is pivotally supported by a frame, which is not shown, provided in the housing 20. The feed roller 25 comes into contact with the sheet 6 placed on the sheet feeder tray 23. When the feed roller 25 rotates by driving of a feed motor 102 (see FIG. 4), the sheet 6 is fed from the sheet feeder tray 23 to a conveyance path 37. The conveyance path 37 is a space defined by a guide member which is not shown. In the present embodiment, the conveyance path 37 curves and extends upward from a rear end of the sheet feeder tray 23 and then extends forward.

The conveyor roller 26 and a driven roller 35 are located downstream of the sheet feeder tray 23 in a conveying direction 4 of the sheet 6. The driven roller 35 is urged toward the conveyor roller 26 by a spring. The driven roller 35 and the conveyor roller 26 have the sheet 6 sandwiched in between. When the conveyor roller 26 rotates by driving of a conveyor motor 101 (see FIG. 4), the sheet 6 sandwiched between the conveyor roller 26 and the driven roller 35 is conveyed in the conveying direction 4.

The discharge roller 27 and a driven roller 36 are located downstream of the conveyor roller 26 in the conveying direction 4. The driven roller 36 is urged toward the discharge roller 27 by a spring. The driven roller 36 and the discharge roller 27 have the sheet 6 sandwiched in between. When the discharge roller 27 rotates by the driving of the conveyor motor 101 (see FIG. 4), the sheet 6 sandwiched between the conveyor roller 26 and the driven roller 36 is conveyed in the conveying direction 4.

The conveyor roller 26 is provided with a rotary encoder 75 (see FIG. 4) that detects a rotation amount of a shaft of the conveyor roller 26. The rotary encoder 75 includes an encoder disk, which is not shown, that rotates together with the shaft of the conveyor roller 26, and an optical sensor which is not shown. The encoder disk is formed with a pattern in which a transmissive portion that transmits light and a non-transmissive portion that does not transmit light are alternately arranged at equal pitches in a circumferential direction. When the encoder disk rotates, a pulse signal is generated each time the optical sensor detects the transmissive portion and the non-transmissive portion. The generated pulse signal is output to the controller 130 (see FIG. 4). The controller 130 calculates the rotation amount of the conveyor roller 26 based on the received pulse signal.

The platen 28 is located between the conveyor roller 26 and the discharge roller 27 in the front-rear direction 2. The platen 28 supports the sheet 6 on an upper surface.

The print head 34 is located between the conveyor roller 26 and the discharge roller 27 in the front-rear direction 2. The print head 34 is located above the platen 28 in the up-down direction 1. The print head 34 is mounted on a carriage 40 (see FIG. 4). The carriage 40 is movably supported by a guide rail, which is not shown, extending in the left-right direction 3. The carriage 40 moves in the left-right direction 3 by driving of a carriage driving motor 103 (see FIG. 4). As the carriage 40 moves, the print head 34 moves in the left-right direction 3.

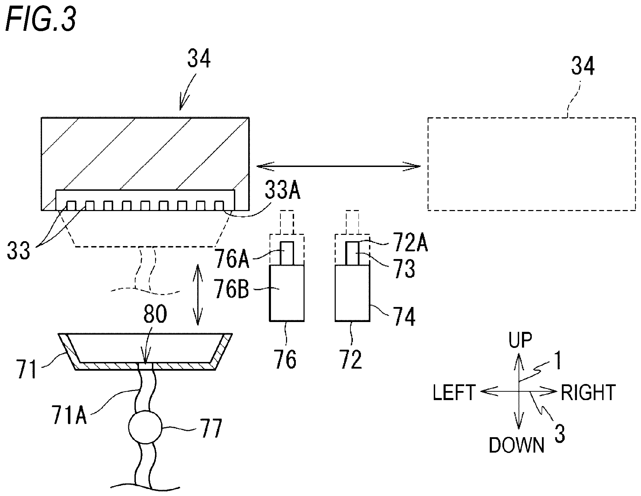

The print head 34 includes a flow path through which ink flows. The flow path communicates with the cartridge 70 through a tube 31. Ink is supplied from the cartridge 70 to the print head 34 through the tube 31. A lower surface of the print head 34 is a nozzle surface 33A. A plurality of nozzles 33 are opened in the nozzle surface 33A. When piezoelectric elements 45 (see FIG. 4) corresponding to the nozzles 33 are driven, ink droplets are discharged from the nozzles 33. The print head 34 may be a line head instead of a serial head. In a case of the line head, a wiper 72 and a wet wiper 76 (see FIG. 3), which will be described later, move relative to the line head and wipe the nozzle surface 33A.

An encoder 38 (see FIG. 4) is disposed on the guide rail. The encoder 38 includes an encoder strip extending along the guide rail and an optical sensor mounted on the carriage 40. The encoder strip has a pattern in which a light transmitting portion that transmits light and a light blocking portion that blocks light are alternately arranged at equal pitches in the left-right direction 3. The optical sensor detects the light transmitting portion and the light blocking portion to detect a pulse signal. The pulse signal is a signal corresponding to a position of the carriage 40 in the left-right direction 3. The pulse signal is output to the controller 130. The controller 130 calculates the position and a speed of the carriage 40 in the left-right direction 3 based on the received pulse signal.

Cap 71, Wiper 72, and Wet Wiper 76

As shown in FIG. 3, a cap 71 is made of an elastic material such as rubber. The cap 71 is located below the print head 34 at a maintenance position. The cap 71 has a cup shape opened upward. The cap 71 is movable in the up-down direction 1 by a cap driving motor 104. As indicated by broken lines in FIG. 3, the cap 71 is in close contact with the nozzle surface 33A of the print head 34 at the maintenance position, and covers the openings of all the nozzles 33.

The cap 71 is connected to a waste ink tube 71A. The cap 71 is formed with a discharge opening 80 in a bottom portion. One end of the waste ink tube 71A is connected to the discharge opening 80. A fluid can flow through an internal space of the waste ink tube 71A. The other end of the waste ink tube 71A is connected to a waste ink tank which is not shown.

When a pump 77 is driven in a state in which the cap 71 is in close contact with the nozzle surface 33A of the print head 34, an internal space of the cap 71 is depressurized, and ink is discharged from the nozzles 33 of the print head 34. The ink discharged from the print head 34 flows out from the internal space of the cap 71 to the waste ink tank through the waste ink tube 71A.

The wiper 72 is located rightward of the cap 71 and is movable in the up-down direction 1 as indicated by broken lines in FIG. 3. The wiper 72 includes a wiper blade 73 made of an elastic material such as rubber and a holder 74. The holder 74 supports the wiper blade 73. The wiper blade 73 extends upward from the holder 74. A leading end portion 72A of the wiper blade 73 faces upward. A pressing pressure when the wiper blade 73 comes into contact with the nozzle surface 33A is determined by a length (a pushing amount p) by which the wiper blade 73 located above overlaps the nozzle surface 33A in the up-down direction 1. In the wiper 72, the pushing amount p of the wiper blade 73 can be changed by, for example, changing a position of the holder 74 in the up-down direction 1. When the print head 34 moves rightward from the maintenance position in a state in which the wiper 72 is located above (the state indicated by the broken lines in FIG. 3), the leading end portion 72A of the wiper blade 73 comes into contact with and wipes the nozzle surface 33A. Accordingly, ink droplets adhering to the nozzle surface 33A of the print head 34 are wiped off by the wiper 72.

The wet wiper 76 is located rightward of the cap 71 and leftward of the wiper 72, and is movable in the up-down direction 1 as indicated by broken lines in FIG. 3. The wet wiper 76 is made of a material that can hold a cleaning liquid such as sponge. Specifically, the wet wiper 76 includes a sponge wiper 76A and a holder 76B. The holder 76B supports the sponge wiper 76A. The sponge wiper 76A has a rectangular parallelepiped shape longer in the up-down direction 1 than in the left-right direction 3. When the print head 34 moves rightward from the maintenance position in a state in which the wet wiper 76 is located above (the state indicated by the broken lines in FIG. 3), the wet wiper 76 comes into contact with the nozzle surface 33A. Accordingly, the cleaning liquid is applied to the nozzle surface 33A of the print head 34. The cleaning liquid includes, for example, a water-soluble organic solvent, a surfactant, and water.

Controller 130 and Memory 140

The controller 130 controls various operations of the printer 10. As shown in FIG. 4, the controller 130 includes a CPU 131 and an ASIC 135. The memory 140 includes a ROM 132, a RAM 133, and an EEPROM 134. The CPU 131, the ASIC 135, the ROM 132, the RAM 133, and the EEPROM 134 are connected via an internal bus 137.

The ROM 132 stores programs for the CPU 131 to control various operations. The RAM 133 is used as a storage area that temporarily stores data, signals, and the like used when the CPU 131 executes the programs, or a work area for data processing. The EEPROM 134 stores settings and flags to be held even after power is turned off.

The conveyor motor 101, the feed motor 102, the carriage driving motor 103, the cap driving motor 104, and a first wiper driving motor 105 are connected to the ASIC 135. Driving circuits for controlling the motors are assembled in the ASIC 135. The CPU 131 outputs drive signals for rotating the motors to the corresponding driving circuits. The driving circuits output drive currents corresponding to the drive signals acquired from the CPU 131 to the corresponding motors. Accordingly, the corresponding motors rotate. That is, the controller 130 controls the feed motor 102 to feed the sheet 6 to the conveyance path 37. The controller 130 controls the conveyor motor 101 to drive the conveyor roller 26 and the discharge roller 27 to convey the sheet 6. The controller 130 controls the carriage driving motor 103 to move the carriage 40. The controller 130 controls the cap driving motor 104 to move the cap 71 in the up-down direction 1. The controller 130 controls the first wiper driving motor 105 to move the wiper 72 in the up-down direction 1. The controller 130 controls a second wiper driving motor 106 to move the wet wiper 76 in the up-down direction 1.

The optical sensor of the rotary encoder 75 is connected to the ASIC 135. The controller 130 calculates a rotation amount of the conveyor motor 101 based on an electric signal received from the optical sensor of the rotary encoder 75.

The encoder 38 is connected to the ASIC 135. The controller 130 recognizes the position and movement of the carriage 40 based on the pulse signal received from the encoder 38.

The piezoelectric element 45 is connected to the ASIC 135. The piezoelectric element 45 operates by being supplied with power from the controller 130 via an IC which is not shown. The controller 130 controls power supply to the piezoelectric element 45 and selectively discharges ink droplets from the plurality of nozzles 33.

An environment sensor 78 is connected to the ASIC 135. The environment sensor 78 detects temperature and humidity and outputs a signal. The controller 130 determines the temperature and the humidity of the environment in which the printer 10 is placed based on the signal output from the environment sensor 78.

The IC substrate 79 of the cartridge 70 is connected to the ASIC 135 via, for example, a contact which is not shown. The controller 130 writes electronic information to the IC substrate 79 and reads liquid information stored in the IC substrate 79.

The operation unit 21 is connected to the ASIC 135. The ASIC 135 receives a signal indicating that a button is pressed from the operation unit 21. The ASIC 135 outputs display data indicating contents to be displayed on a display to the operation unit 21. For example, the ASIC 135 displays, on the display of the operation unit 21, a message indicating that "an abnormality occurs in the head", a message indicating that "wiping operation cannot be appropriately performed", and a message indicating that "maintenance of the head cannot be appropriately performed". The pump 77 is connected to the ASIC 35.

The IC substrate 79 stores liquid information on ink stored in the cartridge 70. The liquid information includes, for example, an ink density $\rho$, an initial concentration W0 of water, a maximum adhesive force A per unit area, a surface tension $\gamma$ of ink, a backward contact angle $\theta D$ of ink, and an equilibrium contact angle $\theta E$ of ink. The liquid information may be stored in the EEPROM 134 corresponding to the type of ink. The controller 130 may read the liquid information from the EEPROM 134 corresponding to the type of ink read from the IC substrate 79.

The EEPROM 134 stores wiper information on the wiper 72. The wiper information includes, for example, a Young's modulus E, a thickness t, a length L and a depth b of the wiper blade 73 in the up-down direction 1, the pushing amount p of the wiper blade 73 against the nozzle surface 33A, and a wiper speed V.

The EEPROM 134 stores, as general constants, a gas constant R, a molar mass M of water, a size a of one water molecule, a diffusion coefficient Dwa of water vapor, a saturated vapor pressure Ps of water, a diameter d of an ink droplet on the nozzle surface 33A, and other constants.

When an image is recorded on the sheet 6, the controller 130 alternately performs a conveying process and a printing process. The conveying process is a process of conveying the sheet 6 by a prescribed line feed amount by driving the conveyor roller 26 and the discharge roller 27. The controller 130 executes the conveying process by controlling the conveyor motor 101. The printing process is a process of causing the print head 34 to discharge ink droplets from the nozzles 33 by controlling power supply to the piezoelectric element 45 while moving the carriage 40 in the left-right direction 3.

After the conveying process is executed, the controller 130 stops the sheet 6. The controller 130 executes the printing process while the sheet 6 is stopped. That is, in the printing process, the controller 130 performs one pass of discharging ink droplets from the nozzles 33 while moving the carriage 40 rightward or leftward. Accordingly, one pass of image recording is performed on the sheet 6. The controller 130 can record an image on an entire image recordable area of the sheet 6 by alternately and repeatedly executing the conveying process and the printing process. That is, the controller 130 records an image on one sheet 6 in a plurality of passes.

The controller 130 is not limited to the above, and may be a controller in which only the CPU 131 performs various processes, only the ASIC 135 performs various processes, or the CPU 131 and the ASIC 135 cooperate with each other to perform various processes. Further, the controller 130 may be a controller in which one CPU 131 independently performs processes, or a plurality of CPUs 131 share processes. The controller 130 may further be a controller in which one ASIC 135 independently performs processes, or a plurality of ASICs 135 share processes.

The controller 130 performs a maintenance process including a purge process, a wiping process, a wet wiping process, and a flushing process. The maintenance process is executed, for example, when elapsed time t from execution of a previous wiping process reaches initial elapsed time t0 stored in the EEPROM 134. The maintenance process may be performed at another timing such as when the printer 10 is powered on or when the cartridge 70 is replaced.

The purge process is a process of aspirating ink from the nozzles 33 by the pump 77 in a state in which the nozzles 33 are covered with the cap 71. In the purge process, inside of the cap 71 has a negative pressure by driving of the pump 77, and foreign matter is aspirated together with the ink from the nozzles 33. The wiping process is a process of wiping the nozzle surface 33A of the print head 34 with the wiper 72. The wet wiping process is a process of applying the cleaning liquid to the nozzle surface 33A of the print head 34 by the wet wiper 76. The flushing process is a process of discharging ink toward a flushing form which is not shown.

Composition of Ink

Hereinafter, the ink will be described in detail. The ink contains resin particles, a coloring material, a water-soluble organic solvent, a surfactant, and water. The ink is water based ink.

The ink has wettability to a hydrophobic recording medium such as coated paper, plastic, films, or OHP sheets, and is not limited thereto. The ink may further be suitable for image recording other than a hydrophobic recording medium such as plain paper, glossy paper, and matte paper. The "coated paper" refers to paper obtained by applying a coating agent to plain paper including pulp as a main constituent element, such as advanced printing paper and intermediate printing paper, for a purpose of improving smoothness, whiteness, glossiness, and the like. Specific examples of the "coated paper" include advanced coated paper and intermediate coated paper.

Resin particles containing at least one of methacrylic acid, acrylic acid, and the like as a monomer can be used, and for example, commercially available products may be used. The resin particles may further contain, for example, styrene and vinyl chloride as a monomer. The resin particles may be contained in an emulsion or the like. The emulsion includes, for example, resin particles and a dispersion medium (for example, water). The resin particles are not in a dissolved state in the dispersion medium, but are dispersed in a range of a specific particle diameter. Examples of the resin particles include acrylic acid-based resins, maleic acid-based ester resins, vinyl acetate-based resins, carbonate resins, polycarbonate resins, styrene-based resins, ethylene-based resins, polyethylene-based resins, propylene-based resins, polypropylene-based resins, urethane-based resins, polyurethane-based resins, polyester resins and copolymer resins thereof, and acrylic-based resins are preferable.

Resin particles having a glass transition temperature (Tg) in a range of, for example, 0°C or more and 200°C or less are used. The glass transition temperature (Tg) is more preferably 20°C or more and 180°C or less, and still more preferably 30°C or more and 150°C or less.

As the emulsion, for example, a commercially available product may be used. Commercially available products include, for example, "SUPERFLEX (registered trademark) 870" (Tg: 71°C) and "SUPERFLEX (registered trademark) 150" (Tg: 40°C) manufactured by DKS Co., Ltd., "MOWINYL (registered trademark) 6760" (Tg: -28°C) and "MOWINYL (registered trademark) DM 774" (Tg: 33°C) manufactured by Japan Coating Resin Corporation, "POLYZOL (registered trademark) AP- 3270N" (Tg: 27°C) manufactured by Showa Electric Co., Ltd., and "HYLOT-X (registered trademark) KE-1062" (Tg: 112°C) and "HYLOT-X (registered trademark) QE-1042" (Tg: 69°C) manufactured by Seiko PMC Corporation.

An average particle diameter of the resin particles is, for example, in a range of 30 nm or more and 200 nm or less. The average particle diameter can be measured as an arithmetic mean diameter using, for example, a dynamic light scattering particle size distribution analyzer "LB-550" manufactured by Horiba, Ltd.

A content (R) of the resin particles in a total amount of the ink is, for example, preferably in a range of 0.1 wt% or more and 30 wt% or less, more preferably in a range of 0.5 wt% or more and 20 wt% or less, and particularly preferably in a range of 1.0 wt% or more and 15.0 wt% or less. The resin particles may be used alone or in combination of two or more kinds thereof.

The coloring material is, for example, a pigment that can be dispersed in water by a pigment dispersing resin (a resin dispersant). Examples of the coloring material include carbon black, inorganic pigments, and organic pigments. Examples of the carbon black include furnace black, lamp black, acetylene black, and channel black. Examples of the inorganic pigment include titanium oxide, an iron oxide-based inorganic pigment, and a carbon black-based inorganic pigment. Examples of the organic pigment include azo pigments such as azo lake, insoluble azo pigments, condensed azo pigments, and chelate azo pigments; polycyclic pigments such as phthalocyanine pigments, perylene and perinone pigments, anthraquinone pigments, quinacridone pigments, dioxazine pigments, thioindigo pigments, isoindoinone pigments, and quinophthalone pigments; dye lake pigments such as basic dye lake pigments and acid dye lake pigments; nitro pigments; nitroso pigments; and aniline black daylight fluorescent pigments.

A solid content of the coloring material in the total amount of the ink is not particularly limited, and can be appropriately determined according to, for example, a desired optical density or chroma. The solid content of the coloring material is preferably in a range of, for example, 0.1 wt% or more and 20.0 wt% or less, and more preferably in a range of 1.0 wt% or more and 15.0 wt% or less. The solid content of the coloring material is weight of the pigment alone, and does not include weight of the resin particles. The coloring material may be used alone or in combination of two or more kinds thereof.

The water-soluble organic solvent is not particularly limited, and any solvent can be used. Examples of the water-soluble organic solvent include propylene glycol, ethylene glycol, 1,2-butanediol, propylene glycol monobutyl ether, dipropylene glycol monopropyl ether, triethylene glycol monobutyl ether, 1,2-hexanediol, and 1,6-hexanediol, and glycol ethers with a propylene oxide group are preferable. Examples of other organic solvents include alkyl alcohols having 1 to 4 carbon atoms such as methyl alcohol, ethyl alcohol, n-propyl alcohol, isopropyl alcohol, n-butyl alcohol, sec-butyl alcohol, and tert-butyl alcohol; and alkylene glycols containing 2 to 6 carbon atoms of an alkylene group such as ethylene glycol, propylene glycol, butylene glycol, triethylene glycol, 1,2,6-hexane triol, thiodiglycol, hexylene glycol, and diethylene glycol; lower alkyl ethers of alkylene glycols such as glycerin, ethylene glycol monomethyl (or ethyl, propyl, butyl) ether, diethylene glycol monomethyl (or ethyl, propyl, butyl) ether, triethylene glycol monomethyl (or ethyl, propyl, butyl, hexyl) ether, tetraethylene glycol monomethyl (or ethyl, propyl, butyl, hexyl) ether, propylene glycol monomethyl (or ethyl, propyl, butyl) ether, dipropylene glycol monomethyl (or ethyl, propyl, butyl) ether, tripropylene glycol monomethyl (or ethyl, propyl, butyl) ether, and tetrapropylene glycol monomethyl (or ethyl) ether; and N-methyl-2-pyrolidone, 2-pyrolidone, and 1,3 -dimethyl-2-imidazolidinone.

Regarding a content of the water-soluble organic solvent in the total amount of the ink, the organic solvent existing alone as liquid at 25°C is preferably 50 wt% or less, more preferably 40 wt% or less, relative to the total amount of the ink. A mass ratio of the water-soluble organic solvent to a solid in the ink (water-soluble organic solvent/solid) is preferably 1.0 or more to avoid contact between particles constituting the solid. More preferably, the mass ratio of the water-soluble organic solvent to the solid in the ink (water-soluble organic solvent/solid) is 2.0 or more. The solid includes at least a pigment. In the present embodiment, the solid includes a pigment and resin particles. The water-soluble organic solvent is preferably a solvent having an evaporation speed at 20°C equal to or lower than an evaporation speed of water. For example, a saturated vapor pressure of water at 20°C is about 2300 Pa, and thus a saturated vapor pressure of the water-soluble organic solvent is preferably 230 Pa or less from a viewpoint of limiting the evaporation speed of the ink to 1/10 of the evaporation speed of water. From a viewpoint of limiting the evaporation speed of the ink to 1/100 of the evaporation speed of water, the saturated vapor pressure of the water-soluble organic solvent is more preferably 20 Pa or less.

In order for the wiper 72 to easily wipe the ink adhering to the nozzle surface 33A, the ink preferably has a low degree of viscosity. When the ink has low viscosity, a maximum wiper speed $V_{max}$ calculated from equation (11) to be described later is large, an adhesive force $F_{ink}$ of the ink to be described later to the nozzle surface 33A is small, and thus the ink adhering to the nozzle surface 33A is easily wiped by the wiper 72. In general, as polymers on surfaces of the particles constituting the solid are entangled with each other, the viscosity of the ink increases. For entanglement of polymers hydrated in the water-soluble organic solvent containing water, an ionic functional group is necessary in a structure of the polymers. For this reason, there is an approximate correlation among the viscosity of the ink, an amount of the ionic functional group in the structure of the polymers, and conductivity associated therewith. From a viewpoint of keeping the viscosity of the ink low, the conductivity is preferably low. For example, conductivity of an aqueous solution when a solid containing at least a pigment is added to water such that the aqueous solution has a concentration, that is, a solid content, of 10 wt% is preferably 5 mS/cm or less.

On the other hand, when the conductivity is excessively low, a repulsive force between particles constituting the solid decreases, and the particles easily aggregate with each other. As a result, storage stability of the ink may be impaired. The conductivity is preferably a certain value or more from a viewpoint of ensuring the storage stability of the ink. For example, the conductivity of the aqueous solution when the solid containing at least a pigment is added to water such that the aqueous solution has a concentration of 10 wt% is preferably 0.1 mS/cm or more.

The water is preferably ion-exchanged water or pure water. A content of water in the total amount of the ink is, for example, preferably in a range of 15 wt% or more and 95 wt% or less, and more preferably in a range of 25 wt% or more and 85 wt% or less. The content of water may be, for example, the balance except for the other components.

The ink may further contain an additive known in the related art as necessary. Examples of the additive include a dye and a polymer component such as a surfactant, a pH adjuster, a viscosity adjuster, a surface tension adjuster, a preservative, a fungicide, a leveling agent, a defoamer, a light stabilizer, an antioxidant, a nozzle drying inhibitor, and an emulsion. The surfactant may further contain a cationic surfactant, an anionic surfactant, or a nonionic surfactant. As the surfactant, for example, a commercially available product may be used. Examples of the commercially available product include "OLFINE (registered trademark) E1010", "OLFINE (registered trademark) E1006", "OLFINE (registered trademark) E1004", "SILFACE SAG503A", and "SILFACE SAG002" manufactured by Nissin Chemical Industry Co., Ltd. A content of the surfactant in the total amount of the ink is, for example, 5 wt% or less, 3 wt% or less, or 0.1 wt% to 2 wt%. Examples of the viscosity modifier include polyvinyl alcohol, cellulose, and a water-soluble resin.

The ink can be prepared by uniformly mixing, for example, the resin particles, the coloring material, the organic solvent, water, and other additives if necessary by a method known in the related art, and removing insoluble matter by a filter or the like.

Determination of Wiping Process Result

When executing the wiping process, the controller 130 executes a determination process of determining a result of the wiping process. In the wiping process, default conditions are set in advance. Examples of the default conditions including an initial wiper speed V0, an initial pushing amount p0, and the initial elapsed time t0 are stored in the EEPROM 134.

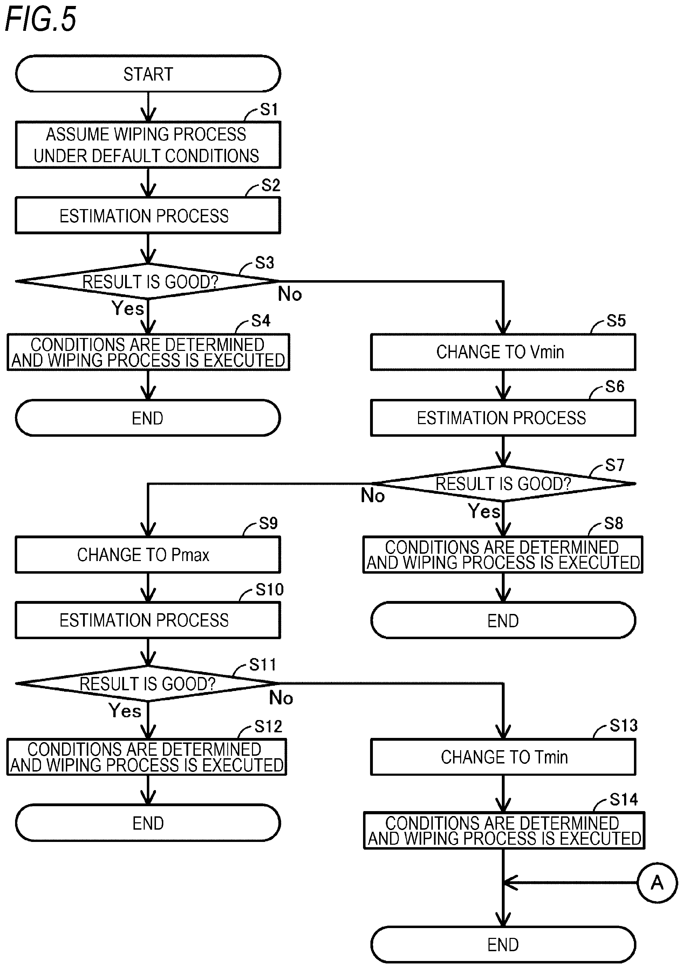

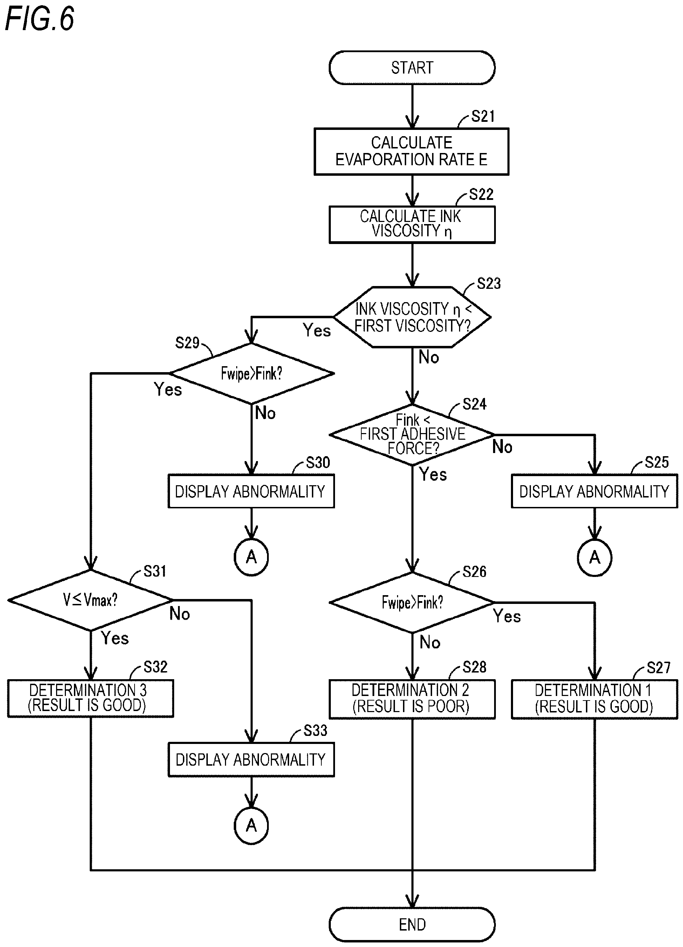

FIGS. 5 and 6 show the determination process. As shown in FIG. 5, the controller 130 executes an estimation process (step S2) assuming the wiping process under the default conditions (step S1). The estimation process will be described later. The controller 130 determines whether the result of the wiping process is good (OK) or poor (NG) based on a determination result recorded in the EEPROM 134 in the estimation process (step S3). When the result of the wiping process is good (step S3; Yes), the controller 130 determines the default conditions as the conditions of the wiping process (step S4). When the conditions of the wiping process are determined, the controller 130 executes the wiping process according to the determined conditions.

When the result of the wiping process is poor (step S3; No), the controller 130 changes the initial wiper speed V0 to a minimum wiper speed Vmin (step S5). The minimum wiper speed Vmin refers to a range of a wiper speed that can be set in the printer 10 or a slowest wiper speed among a plurality of wiper speeds.

After changing the initial wiper speed V0 of the default conditions to the minimum wiper speed Vmin, the controller 130 executes the estimation process for another time (step S6). The controller 130 determines whether the result of the wiping process is good (OK) or poor (NG) based on the determination result recorded in the EEPROM 134 in the estimation process (step S7). When the result of the wiping process is good (step S7; Yes), the controller 130 determines the minimum wiper speed Vmin as the condition of the wiping process (step S8). When the conditions of the wiping process are determined, the controller 130 executes the wiping process according to the determined conditions.

When the result of the wiping process is poor (step S7; No), the controller 130 changes the initial pushing amount p0 to a maximum pushing amount pmax (step S9). The maximum pushing amount pmax corresponds to a maximum length settable among lengths by which the wiper blade 73 located above and the nozzle surface 33A overlap in the up-down direction 1. Accordingly, the conditions of the wiping process are changed from the default conditions such that the initial wiper speed V0 is changed to the minimum wiper speed Vmin and the initial pushing amount p0 is changed to the maximum pushing amount pmax. When the pushing amount p increases, a displacement amount $\delta$ (m) and a deformation angle $\theta$ increase.

After changing the initial pushing amount p0 to the maximum pushing amount pmax, the controller 130 executes the estimation process for still another time (step S10). The controller 130 determines whether the result of the wiping process is good (OK) or poor (NG) based on the determination result recorded in the EEPROM 134 in the estimation process (step S11). When the result of the wiping process is good (step S11; Yes), the controller 130 determines the condition of the pushing amount pmax as the condition of the wiping process (step S12). When the conditions of the wiping process are determined, the controller 130 executes the wiping process according to the determined conditions.

When the result of the wiping process is poor (step S11; No), the controller 130 changes the initial elapsed time t0 to minimum elapsed time tmin (step S13). The controller 130 determines the conditions of the wiping process and executes the wiping process (step S14). Accordingly, the conditions for the wiping process are changed from the default conditions such that the initial wiper speed V0 is changed to the minimum wiper speed Vmin, the initial pushing amount p0 is changed to the maximum pushing amount pmax, and the initial elapsed time t0 is changed to the minimum elapsed time tmin. The initial wiper speed V0 and the minimum wiper speed Vmin are examples of a predetermined moving speed at which the head and wiper are moved relative to each other in the wiping process.

Estimation Process

The controller 130 executes the estimation process in a procedure shown in FIG. 6. The controller 130 calculates an evaporation rate E (step S21). The evaporation rate E is calculated by the following equation (1) based on an initial concentration $W_0$ ($kg/m^3$) of water when an ink droplet adheres to the nozzle surface 33A of the print head 34, a concentration W ($kg/m^3$) of water when the elapsed time t elapses from execution of the previous wiping process, and an ink density $\rho$ ($kg/m^3$).

[Formula 1]

$$E = \frac{(W_0 - W)}{\rho} \qquad \text{(Equation 1)}$$

The initial concentration $W_0$ of water and the ink density $\rho$ are read from the EEPROM 134 and the IC substrate 79. The elapsed time t is the elapsed time from the previous wiping process, and is obtained based on an internal clock, an external clock, or the like.

The concentration W ($kg/m^3$) of water when the elapsed time t elapses is calculated by the following equation (2) based on the initial concentration $W_0$ ($kg/m^3$) of water, the saturated vapor pressure $P_s$ (Pa) of water, molar mass M (kg/mol) of water, a diffusion coefficient $D_{wa}$ ($m^2/s$) of water vapor, relative humidity $H_0$, a gas constant R ($Pa·m^3/K·mol$), environmental temperature T (k), and a liquid droplet diameter d (m). The concentration W ($kg/m^3$) of water in equation (2) may be calculated, for example, by an equation obtained from another viewpoint.

[Formula 2]

$$W = W_0 exp\left(-\frac{12 P_s M D_{wa}(1-H_0)}{RTW_0 d^2} t\right) \qquad \text{(Equation 2)}$$

A value obtained by differentiating equation (2) relative to time represents the evaporation speed of water. An equation obtained by differentiating equation (2) relative to time indicates that the evaporation speed of water is approximately proportional to the saturated vapor pressure of water since the saturated vapor pressure of water is multiplied as a coefficient. The evaporation speed of the water-soluble organic solvent can be calculated by replacing the saturated vapor pressure $P_s$ of water with the saturated vapor pressure $P_s$ of the water-soluble organic solvent in equation (2).

The initial concentration $W_0$ of water, the saturated vapor pressure $P_s$ of water, the molar mass M of water, the diffusion coefficient $D_{wa}$ of water vapor, the gas constant R, and the liquid droplet diameter d are read from the EEPROM 134 and the IC substrate 79. The relative humidity $H_0$ and the environmental temperature T are calculated based on an output value of the environment sensor 78.

The controller 130 calculates ink viscosity $\eta$ (mPa·s) based on the calculated evaporation rate E (step S22). The ink viscosity $\eta$ is calculated using $\eta = \alpha E + \beta$ (equation 3) for each measured value by measuring a relationship between the evaporation rate E and the ink viscosity $\eta$ for each type of ink in advance and performing linear interpolation using a slope $\alpha$ and an intercept $\beta$ between measured values from a measurement result. Equation (3) may be stored in advance in the EEPROM 134 corresponding to the type of ink, and may be stored in advance in the IC substrate 79. Processing of steps S21 and S22 is an example of a viscosity determination process and a viscosity determination step.

The controller 130 determines whether the calculated ink viscosity $\eta$ is lower than first viscosity (step S23). The first viscosity is, for example, 30,000 mPa·s, and is stored in the EEPROM 134 in advance. When the ink viscosity $\eta$ is equal to or higher than the first viscosity, the ink is in a state of being substantially solidified and almost losing fluidity as liquid. In other words, when the ink viscosity $\eta$ is equal to or higher than the first viscosity, the ink is in a solidified state.

When determining that the ink viscosity $\eta$ is equal to or higher than the first viscosity (step S23; No), the controller 130 determines whether the adhesive force Fink of the ink to the nozzle surface 33A is less than a first adhesive force (step S24). The first adhesive force has the same value as a maximum Fwipe calculated by equation (4) to be described later. In other words, the first adhesive force is an adhesive force with which the substantially solidified ink on the nozzle surface 33A adheres to the nozzle surface 33A so strongly that the ink cannot be wiped by the wiper blade 73. Since Fwipe is maximum when θ = 45° according to equation (4) described later, the first adhesive force is calculated according to equation (4) using various parameters of the apparatus with θ = 45°. For example, the first adhesive force is 0.3 N. The first adhesive force is stored in the EEPROM 134 in advance. Fink is calculated by equation (7) to be described later.

When Fink is equal to or more than the first adhesive force (step S24; No), the controller 130 displays, on the display of the operation unit 21, a message indicating that "maintenance of the head cannot be appropriately performed" (step S25). The controller 130 ends the determination process of FIG. 5. When Fink is less than the first adhesive force (step S24; Yes), the controller 130 determines whether the force Fwipe (an example of a pressing pressure) applied from the wiper blade 73 to the ink exceeds Fink (step S26).

Fwipe is calculated based on the Young's modulus E (Pa) of the wiper blade 73, a second moment of area 1 ($m^4$) of the wiper blade 73, the displacement amount δ (m) of the wiper blade 73, the length L (m) of the wiper blade 73, and the deformation angle θ of the wiper blade 73, according to the following equation (4). Fwipe in equation (4) may be calculated, for example, by an equation obtained from another viewpoint.

[Formula 3]

$$F_{wipe} = \frac{3EI\delta}{L^3} cos\theta \qquad \text{(Equation 4)}$$

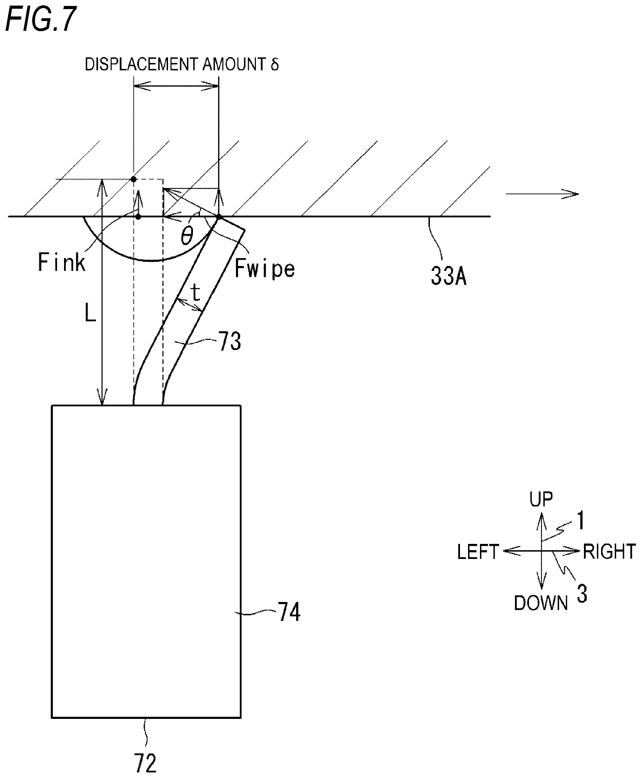

FIG. 7 shows a state in which the wiper blade 73 is in contact with the nozzle surface 33A of the print head 34. The wiper blade 73 is inclined in a moving direction of the print head 34 (rightward in FIG. 7) while being in contact with the nozzle surface 33A. The length L of the wiper blade 73 is the length from an upper surface of the holder 74 to a leading end of the wiper blade 73 in a state in which the wiper blade 73 extends upward without inclination. The second moment of area I of the wiper blade 73 is calculated from the thickness t (m), the length L (m), and the depth b (m) of the wiper blade 73. The displacement amount δ and the deformation angle θ of the wiper blade 73 are calculated according to the following equations (5) and (6) when the length L and the pushing amount p of the wiper blade 73 are determined.

[Formula 4]

$$\cos\theta = (L - \delta)/L \qquad \text{(Equation 5)}$$

[Formula 5]

$$L \sin\theta = \delta \qquad \text{(Equation 6)}$$

Fink is calculated based on the depth b (m) of the wiper blade 73, the liquid droplet diameter d (m), and the maximum adhesive force A per unit area ($N/m^2$) according to the following equation (7). Fink in equation (7) may be calculated, for example, by an equation obtained from another viewpoint. The calculation based on the following equation (7) is an example of an adhesive force determination process and an adhesive force determination step.

[Formula 6]

$$F_{ink} = bdA \qquad \text{(Equation 7)}$$

When Fwipe exceeds Fink, the controller 130 determines that the ink droplet on the nozzle surface 33A is peeled off by the wiper blade 73 (determination 1) (step S26; Yes). The controller 130 records the determination result in the EEPROM 134 (step S27). When Fwipe is equal to or less than Fink, the controller 130 determines that the substantially solidified ink on the nozzle surface 33A remains without being peeled off by the wiper blade 73 (determination 2) (step S26; No). The controller 130 records the determination result in the EEPROM 134 (step S28).

When determining that the ink viscosity η is lower than the first viscosity (step S23; Yes), the controller 130 determines whether Fwipe applied to the ink from the wiper 72 exceeds a stress Fink due to viscous friction of the ink (step S29). When the ink viscosity η is lower than the first viscosity, the ink is in a state of flowing as liquid. In the state in which the ink flows as liquid, the stress Fink due to the viscous friction of the ink is considerably larger than the adhesive force Fink of the ink to the nozzle surface 33A, and thus the stress Fink due to the viscous friction of the ink is dominant. In other words, in the state in which the ink flows as liquid, the adhesive force Fink of the ink to the nozzle surface 33A is negligible as compared with the stress Fink due to the viscous friction of the ink. That is, depending on whether the ink is liquid or solid, Fink is calculated by different equations and compared. Fink when the ink viscosity η is lower than the first viscosity is calculated based on equation (8) to be described later. Fwipe is calculated based on equation (4) described above.

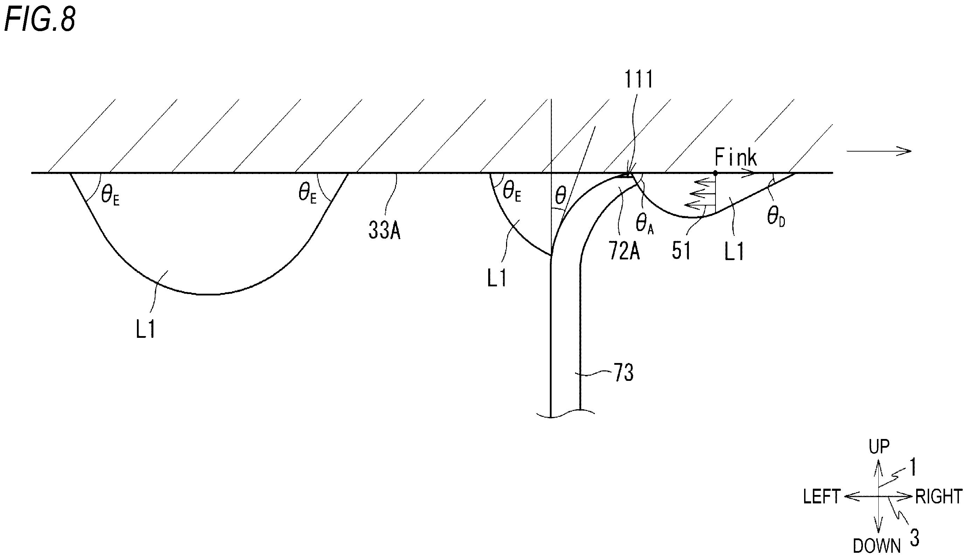

FIG. 8 shows a state in which the wiper blade 73 is in contact with an ink droplet L1 adhering to the nozzle surface 33A and viscous friction is generated from a shear flow 51 in the ink droplet L1. The viscous friction of the ink droplet L1 is calculated as Fink. Specifically, Fink is calculated based on the ink viscosity η (Pa·s), the depth (m) of the wiper blade 73, the wiper speed V (m/s), and the deformation angle θ of the wiper blade 73 according to the following equation (8). Fink in equation (8) may be calculated, for example, by an equation obtained from another viewpoint. The wiper speed V is a predetermined moving speed at which the head and wiper are moved relative to each other in the wiping process. The wiper speed V is the initial wiper speed V0 under a default condition.

[Formula 7]

$$F_{ink} = \frac{3\eta blV}{tan\left(\frac{\pi}{2} - \theta\right)} \qquad \text{(Equation 8)}$$

Here, l is calculated by l = ln (d/a) based on the size a (m) of one water molecule and the liquid droplet diameter d (m). In addition, $tan(\pi/2-\theta) = cos\theta/sin\theta$.

When Fwipe is equal to or less than Fink, the controller 130 determines that the wiper blade 73 fails in pushing the ink droplet on the nozzle surface 33A (step S29; No). In this case, the controller 130 displays, on the display of the operation unit 21, a message indicating that "maintenance of the head cannot be appropriately performed" (step S30). The controller ends the determination process of FIG. 5.

When Fwipe exceeds Fink, the controller 130 determines that the wiper blade 73 succeeds in pushing the ink droplet on the nozzle surface 33A (step S29; Yes). In this case, the controller 130 determines whether the ink droplet on the nozzle surface 33A follows the wiper blade 73 and moves on the nozzle surface 33A (step S31). Specifically, as described later, it is determined whether the wiper speed V is equal to or lower than the maximum wiper speed Vmax.

FIG. 8 shows a state in which the ink droplet L1 is wiped by the wiper blade 73 in a state in which the ink droplet L1 adheres to the nozzle surface 33A. In FIG. 8, the print head 34 moves rightward relative to the wiper blade 73.

Although the leading end portion 72A of the wiper blade 73 is in contact with the nozzle surface 33A, the leading end portion 72A has minute irregularities in the front-rear direction 2 (the direction perpendicular to a paper surface in FIG. 8). Accordingly, the entire leading end portion 72A is not in uniform contact with the nozzle surface 33A, and there are portions of the leading end portion 72A that are in contact with the nozzle surface 33A and portions that are not in contact with the nozzle surface 33A. FIG. 8 shows a portion of the leading end portion 72A that is not in contact with the nozzle surface 33A. At a portion where the leading end portion 72A is not in contact with the nozzle surface 33A, there is a gap 111 in the up-down direction 1 between the leading end portion 72A and the nozzle surface 33A.

When the leading end portion 72A comes into contact with a right side of the ink droplet adhering to the nozzle surface 33A, a part of the ink droplet flows through the gap 111 between the leading end portion 72A and the nozzle surface 33A and moves to rightward of the leading end portion 72A. On the right side of the leading end portion 72A, viscous friction of the ink relative to the nozzle surface 33A and surface tension of the ink are generated. If a workload dQ due to the viscous friction of the ink is smaller than a workload F·V due to the surface tension of the ink, the ink droplet follows the wiper blade 73 and is wiped off from the nozzle surface 33A. If the workload dQ due to the viscous friction of the ink is larger than the workload F·V due to the surface tension of the ink, the ink droplet does not follow the wiper blade 73 and remains on the nozzle surface 33A.

The workload dQ based on the viscous friction of the ink is calculated based on the following equation (9).

[Formula 8]

$$dQ = \frac{3\eta l V^2}{tan\theta_D}$$

(Equation 9)

The workload F·V of the surface tension of the ink is calculated based on the following equation (10). The workload F·V in equation (8) may be calculated, for example, by an equation obtained from another viewpoint.

[Formula 9]

$$F \cdot V = \gamma(cos\theta_E - cos\theta_D) \cdot V$$

(Equation 10)

A contact angle on a right side of the ink droplet in FIG. 8 is the backward contact angle $\theta_D$. A contact angle on a left side of the ink droplet is an advance contact angle $\theta_A$. In FIG. 8, the equilibrium contact angles $\theta_E$ of the ink droplet before coming into contact with the wiper blade 73 are equal on the left and right sides.

The workload dQ due to the viscous friction of the ink and the workload F·V due to the surface tension of the ink both increase in proportion to the wiper speed V. The wiper speed V at which the workload dQ due to the viscous friction of the ink is equal to the workload F·V due to the surface tension of the ink is the maximum wiper speed Vmax at which the wiper blade 73 wipes the ink droplet on the nozzle surface 33A.

When equation (9) and equation (10) are solved relative to the wiper speed V, the following equation (11) for calculating the maximum wiper speed Vmax is derived.

[Formula 10]

$$V_{max} = \frac{\gamma \, tan\theta_D}{3\eta l}(cos\theta_D - cos\theta_E)$$

(Equation 11)

When the wiper speed V is equal to or lower than the maximum wiper speed Vmax (V ≤ Vmax, step S31; Yes), the controller 130 determines that the ink droplet follows the wiper blade 73 and is wiped off the nozzle surface 33A (determination 3). The controller 130 records the determination result in the EEPROM 134 (step S32). When the wiper speed V is higher than the maximum wiper speed Vmax (V > Vmax, step S31; No), the controller 130 determines that the ink droplet does not follow the wiper blade 73 and remains on the nozzle surface 33A. In this case, the controller 130 displays, on the display of the operation unit 21, a message indicating that "maintenance of the head cannot be appropriately performed" (step S33). The controller ends the determination process of FIG. 5.

In the above-described estimation process, the determination 1 in which the substantially solidified ink adhering to the nozzle surface 33A is peeled off by the wiper blade 73 and the determination 3 in which the ink droplet adhering to the nozzle surface 33A follows the wiper blade 73 and is wiped off from the nozzle surface 33A are the determination that the result of the wiping process is good (OK). The determination 2 is the determination that the result of the wiping process is poor (NG). After determining that the result of the wiping process is poor (NG) in step S26, the controller 130 changes the default conditions assumed in step S1 to one of the minimum wiper speed Vmin, the maximum pushing amount Pmax, and the minimum elapsed time tmin.

For example, when the initial wiper speed V0 is changed to the minimum wiper speed Vmin in step S5, the wiper speed V may be equal to or lower than the maximum wiper speed Vmax. Accordingly, in step S29 of the estimation process, it may be determined that the ink droplet follows the wiper blade 73 and is wiped off the nozzle surface 33A. In step S9, when the initial pushing amount p0 is changed to the maximum pushing amount pmax, the displacement amount $\delta$ (m) of the wiper blade 73 and the deformation angle $\theta$ of the wiper blade 73 are changed in equation (4), and Fwipe increases. Accordingly, in step S26 of the estimation process, it may be determined that the substantially solidified ink on the nozzle surface 33A is peeled off by the wiper blade 73.

When the initial elapsed time t0 is changed to the minimum elapsed time tmin, an interval of the wiping process is shortened. Accordingly, in equation (2), the water concentration W ($kg/m^3$) when the elapsed time t from the previous wiping process elapses decreases, and as a result, in equation (1), the evaporation rate E decreases. When the evaporation rate E decreases, the ink viscosity $\eta$ decreases in equation (3). When the ink viscosity $\eta$ decreases, the force Fink decreases in equation (8), and the workload dQ due to the viscous friction of the ink decreases in equation (9). As a result, the maximum wiper speed Vmax increases, and in step S29 of the estimation process, it may be determined that the ink droplet follows the wiper blade 73 and is wiped off the nozzle surface 33A (determination 3).

When determining that the ink viscosity $\eta$ is equal to or higher than the first viscosity in step S23 of the estimation process, the controller 130 may execute the wet wiping process of bringing the wet wiper 76 into contact with the nozzle surface 33A and moving the print head 34 at the same time as the wiping process.

Further, in step S26 of the estimation process, after it is determined that the substantially solidified ink on the nozzle surface 33A is not peeled off by the wiper blade 73 and remains (determination 2), the wet wiping process may be executed when the determination 2 is made even if the conditions of the wiping process are changed to the minimum wiper speed Vmin and the maximum pushing amount pmax.

Effects of Embodiment

In the printer 10, the controller 130 executes the estimation process and changes at least one of the wiper speed V, the pushing amount p, and the elapsed time t in response to the estimation that the ink droplet remains on the nozzle surface 33A in the estimation process, and thus the conditions of the wiping process are optimized.

In the printer 10, the controller 130 changes the wiper speed V, the pushing amount p, and the elapsed time t in this order in response to the estimation that the ink droplet remains on the nozzle surface 33A in the estimation process and executes the estimation process again, and thus the conditions of the wiping process are optimized while reducing a frequency of the wiping process.

In the printer 10, when the ink viscosity $\eta$ is lower than the first viscosity in the estimation process, the controller 130 determines that the ink droplet follows the wiper blade 73 and is wiped from the nozzle surface 33A on the condition that Fwipe when the wiper blade 73 comes into contact with the nozzle surface 33A is larger than the stress Fink due to the viscous friction of the ink. For this reason, determination accuracy of the controller 130 is high. Accordingly, even if moisture evaporates from the ink adhering to the nozzle surface 33A and part of the ink is solidified, the ink is wiped from the nozzle surface 33A by the wiper blade 73 in the wiping process.

In the printer 10, when the ink viscosity $\eta$ is lower than the first viscosity in the estimation process, the controller 130 determines that the ink droplet follows the wiper blade 73 and is wiped from the nozzle surface 33A on the condition that Fwipe when the wiper blade 73 comes into contact with the nozzle surface 33A is larger than Fink and the wiper speed V is equal to or lower than the maximum wiper speed Vmax. For this reason, the determination accuracy of the controller 130 is high.

In the printer 10, when the ink viscosity $\eta$ is equal to or higher than the first viscosity in the estimation process, the controller 130 determines that the ink droplet on the nozzle surface 33A is peeled off by the wiper blade 73 on the condition that Fink is less than the first adhesive force and Fwipe exceeds Fink. For this reason, the determination accuracy of the controller 130 is high. Accordingly, even if moisture evaporates from the ink adhering to the nozzle surface 33A and the ink is substantially solidified, the ink is wiped from the nozzle surface 33A by the wiper blade 73 in the wiping process.

In the printer 10, the controller 130 displays a message indicating that "maintenance of the head cannot be appropriately performed" on the display of the operation unit 21 on the condition that Fink is equal to or more than the first adhesive force in the estimation process. For this reason, the user can know that an abnormality occurs in the print head 34, and can eliminate a failure of the print head 34 by, for example, replacing and cleaning the print head 34.

In the printer 10, the controller 130 calculates the ink viscosity $\eta$ based on the evaporation rate E calculated based on the above equation 1 in the estimation process, and thus the determination accuracy of the controller 130 is high. For this reason, in the wiping process, the ink is more reliably wiped from the nozzle surface 33A by the wiper blade 73.

In the printer 10, the controller 130 displays a message indicating that "maintenance of the head cannot be appropriately performed" on the display of the operation unit 21 on the condition that the stress Fink due to the calculated viscous friction is equal to or larger than Fwipe in the estimation process. For this reason, the user can know that an abnormality occurs in the print head 34, and can eliminate a failure of the print head 34 by, for example, replacing and cleaning the print head 34.

In the printer 10, when the stress Fink due to the calculated viscous friction is less than Fwipe in the estimation process, the controller 130 displays a message indicating that "maintenance of the head cannot be appropriately performed" on the display of the operation unit 21 on the condition that the calculated maximum wiper speed Vmax is less than the wiper speed V. For this reason, the user can know that an abnormality occurs in the print head 34, and can eliminate a failure of the print head 34 by, for example, replacing and cleaning the print head 34.

In the printer 10, the controller 130 calculates Fwipe based on the wiper information on the wiper 72, and thus the ink is more reliably wiped from the nozzle surface 33A by the wiper blade 73.

In the printer 10, the controller 130 calculates the stress Fink due to the viscous friction of the ink on the nozzle surface 33A based on the ink viscosity $\eta$ in step S27 of the estimation process. The ink viscosity $\eta$ is calculated based on the evaporation rate E calculated in step S21 of the estimation process. In other words, Fink is calculated based on the calculated evaporation rate E. For this reason, in the wiping process, the ink is more reliably wiped from the nozzle surface 33A by the wiper blade 73.

In the printer 10, the pushing amount p can be changed by changing a position of the wiper blade 73 relative to the nozzle surface 33A in the up-down direction 1. For this reason, it is easy to change Fwipe.

In the printer 10, since the ink contains a plurality of resin particles, a film in which the plurality of resin particles are coupled is easily formed by drying. For this reason, it may be difficult to wipe ink from the nozzle surface 33A by the wiper blade 73. However, in the printer 10, since the conditions of the wiping process are optimized, the ink can be effectively wiped from the nozzle surface 33A by the wiper blade 73.

Here, when the ink before adhering to the nozzle surface 33A and being substantially solidified is wiped by the wiper blade 73, the stress Fink due to the viscous friction of the ink is considered. The stress Fink due to the viscous friction of the ink is proportional to the ink viscosity $\eta$ as can be seen from the equation (8). For this reason, when the ink viscosity $\eta$ is less likely to increase, the stress Fink due to the viscous friction of the ink is also less likely to increase, and thus the ink adhering to the nozzle surface 33A is more likely to be wiped by the wiper blade 73.

In order to make the ink viscosity $\eta$ less likely to increase, it is considered to (a) contain an organic solvent having a vapor pressure at 20°C lower than that of water in the ink, (b) increase the mass ratio (water-soluble organic solvent/solid), and (c) decrease the conductivity of the aqueous solution when the solid containing at least the pigment contained in the ink is added to water.

In the printer 10, the mass ratio of the water-soluble organic solvent to the solid containing at least the pigment in the ink (water-soluble organic solvent/solid) is 1.0 or more to avoid contact between particles constituting the solid containing at least the pigment. More preferably, the mass ratio of the water-soluble organic solvent to the solid in the ink (water-soluble organic solvent/solid) is 2.0 or more. For this reason, even after water is evaporated from the ink, a state in which a large amount of the water-soluble organic solvent is contained in the ink can be maintained, and thus the ink viscosity $\eta$ is less likely to increase compared to a case in which the amount of the water-soluble organic solvent contained in the ink is small. The water-soluble organic solvent has a vapor pressure of 20 Pa or less at 20°C. For this reason, since the water-soluble organic solvent that is less volatile than water is contained in the ink, the ink is less likely to be solidified. For this reason, the ink viscosity $\eta$ is less likely to increase, and thus the ink is more likely to be wiped from the nozzle surface 33A by the wiper blade 73.

In the printer 10, the conductivity of the aqueous solution when the solid containing at least the pigment in the ink is added to water such that the aqueous solution has a concentration of 10% is 5 mS/cm or less. For this reason, since the amount of the ionic functional group is small, entanglement of polymers on the surfaces of the particles constituting the solid containing at least the pigment is little. As a result, the viscosity of the ink is less likely to increase, and the ink is more likely to be wiped from the nozzle surface 33A by the wiper blade 73.

Modifications

In the determination process in the above-described embodiment, the wiper speed V, the pushing amount p, and the elapsed time t are changed in this order. Alternatively, this order may be swapped. In the determination process, all of the wiper speed V, the pushing amount p, and the elapsed time t may not be changed, and only a part of them may be changed.

Further, the print head 34 moves in the left-right direction 3 to perform the wiping process in a state in which the wiper 72 moves upward in the up-down direction 1. Alternatively, the wiping process is not limited thereto. For example, the wiping process may be executed by moving the wiper 72 in the left-right direction 3 relative to the stationary print head 34.

In the above-described embodiment, in steps S25, S30, and S33 of the estimation process, the controller 130 displays a message indicating that "maintenance of the head cannot be appropriately performed" on the display of the operation unit 21. Alternatively, the controller 130 may also display a message prompting execution of the wet wiping process together with the message. In this way, the user can cause the controller 130 to execute the wet wiping process. Accordingly, the cleaning liquid comes into contact with the ink adhering to the nozzle surface 33A, and thus the adhesive force Fink of the ink to the nozzle surface 33A decreases and the ink can be removed from the nozzle surface 33A.

The liquid information may not be stored in the IC substrate 79 or the EEPROM 134 of the cartridge 70. For example, the liquid information may be stored in a memory of a server with which the printer 10 can communicate through the Internet. The liquid information may be input by the user from the operation unit 21 and stored in the EEPROM 134.

In the printer 10, in step S29 of the estimation process, although it is determined whether the ink droplet on the nozzle surface 33A follows the wiper blade 73 and moves on the nozzle surface 33A by determining whether Fwipe exceeds Fink, the processing of step S29 may also be omitted. In this case, in step S27, it may be determined that the ink droplet follows the wiper blade 73 and is wiped from the nozzle surface 33A (determination 3) on the condition that Fwipe applied to the ink from the wiper 72 is determined to exceed the stress Fink due to the viscous friction of the ink.

In the printer 10, the initial pushing amount p0 is set as a default condition in the wiping process. Alternatively, the initial pushing amount p0 may be set to a large value as the elapsed time t from execution of the previous wiping process increases. In this case, the elapsed time t is the elapsed time from the previous wiping process, and is obtained based on an internal clock, an external clock, or the like. As the elapsed time t increases, the evaporation rate E increases and the ink viscosity $\eta$ increases, and thus the ink can be more reliably wiped from the nozzle surface 33A by the wiper blade 73 by increasing the initial pushing amount p0 and increasing Fwipe.

In the printer 10, although the ink viscosity $\eta$ of the ink adhering to the nozzle surface 33A is determined in steps S21 and S22, the ink viscosity $\eta$ may not be determined. That is, steps S21 to S23 may be omitted. In this case, ink having the mass ratio of the solid containing at least a pigment to the water-soluble organic solvent (water-soluble organic solvent/solid) of 2.0 or more is used. The water-soluble organic solvent includes a solvent having a saturated vapor pressure of 20 Pa or less at 20°C. In the ink to be used, the conductivity of the aqueous solution when a solid containing at least a pigment in the ink is added to water such that the aqueous solution has a concentration of 10% is 5 mS/cm or less. Further, since the ink adhering to the nozzle surface 33A is less likely to be solidified, steps S24 to 28 may be omitted.

While the invention has been described in conjunction with various example structures outlined above and illustrated in the figures, various alternatives, modifications, variations, improvements, and/or substantial equivalents, whether known or that may be presently unforeseen, may become apparent to those having at least ordinary skill in the art. Accordingly, the example embodiments of the disclosure, as set forth above, are intended to be illustrative of the invention, and not limiting the invention. Various changes may be made without departing from the spirit and scope of the disclosure. Therefore, the disclosure is intended to embrace all known or later developed alternatives, modifications, variations, improvements, and/or substantial equivalents.

**Claims**

1. A liquid discharge apparatus comprising:

   a head having a nozzle surface in which a nozzle is opened;
   a wiper configured to come into contact with the nozzle surface and move relative to the head; and
   a controller, wherein
   the controller is configured to execute:

   a viscosity determination process of determining viscosity of liquid adhering to the nozzle surface; and
   a wiping process in which the wiper comes into contact with the nozzle surface and moves relative to the head, and
   in a case in which the determined viscosity is lower than first viscosity indicating that the liquid is substantially solidified, a pressing pressure when the wiper comes into contact with the nozzle surface in the wiping process is set to be larger than a stress due to viscous friction of the liquid on the nozzle surface.

2. The liquid discharge apparatus according to claim 1, wherein

   the controller is further configured to execute an adhesive force determination process of determining an adhesive force of the liquid adhering to the nozzle surface in a case in which the determined viscosity is equal to or higher than the first viscosity, and
   when the determined adhesive force is less than a first adhesive force which is the same value as a maximum force applied from the wiper to the liquid, the pressing pressure in the wiping process is set to be larger than the determined adhesive force.

3. The liquid discharge apparatus according to claim 2, further comprising:

   a notification device connected to the controller, wherein
   the controller is further configured to actuate the notification device when the determined adhesive force is equal to or larger than the first adhesive force.

4.  The liquid discharge apparatus according to claim 2, wherein
    the controller is configured to:

    determine an evaporation rate of the liquid adhering to the nozzle surface based on at least elapsed time from execution of the previous wiping process, liquid information on the liquid discharged by the head, and environment information on an environment of the head; and
    determine the viscosity of the liquid adhering to the nozzle surface based on the determined evaporation rate.

5.  The liquid discharge apparatus according to claim 1, further comprising:

    a notification device connected to the controller, wherein
    the controller is further configured to:

    determine, based on the determined viscosity, the stress due to the viscous friction of the liquid in a shear flow generated in the liquid by the relatively moving wiper; and
    actuate the notification device in a case in which the determined stress due to the viscous friction is equal to or larger than the pressing pressure.

6.  The liquid discharge apparatus according to claim 5, wherein
    the controller is further configured to:

    determine a maximum moving speed of the wiper when a workload of the stress due to the viscous friction and a workload of a surface tension of the liquid generated in the liquid by the relatively moving wiper are balanced, in a case in which the determined stress due to the viscous friction is less than the pressing pressure; and
    actuate the notification device when the determined maximum moving speed is less than a predetermined moving speed at which the head and the wiper are relatively moved in the wiping process.

7.  The liquid discharge apparatus according to claim 1, wherein the controller is configured to determine the pressing pressure based on wiper information on the wiper.

8.  The liquid discharge apparatus according to claim 4, wherein the controller is configured to determine the adhesive force based on the determined evaporation rate.

9.  The liquid discharge apparatus according to claim 4, wherein the controller is configured to increase the pressing pressure as the elapsed time increases.

10. The liquid discharge apparatus according to claim 9, wherein the controller is configured to increase the pressing pressure by changing a position of the wiper relative to the nozzle surface in an up-down direction.

11. The liquid discharge apparatus according to any one of claims 1 to 10, wherein the liquid is water based ink comprising a pigment and a water-soluble organic solvent.

12. The liquid discharge apparatus according to claim 11, wherein the liquid further comprises a plurality of resin particles.

13. The liquid discharge apparatus according to claim 11, wherein

    a mass ratio of the water-soluble organic solvent to a solid component of the liquid (water-soluble organic solvent/solid component) is 1.0 or more, and
    the water-soluble organic solvent comprises a solvent having a saturated vapor pressure of 20 Pa or less at 20°C.

14. The liquid discharge apparatus according to claim 11, wherein

    a mass ratio of the water-soluble organic solvent to a solid component in the liquid (water-soluble organic solvent/solid component) is 2.0 or more, and
    when an aqueous solution having a content of the solid component of 10 wt% is prepared, conductivity of the aqueous solution is 5 mS/cm or less.

**15.** The liquid discharge apparatus according to claim 11, wherein

a mass ratio of the water-soluble organic solvent to a solid component in the liquid (water-soluble organic solvent/solid component) is 2.0 or more,
the water-soluble organic solvent comprises a solvent having a saturated vapor pressure at 20°C of 20 Pa or less, and
when an aqueous solution having a content of the solid component of 10 wt% is prepared, conductivity of the aqueous solution is 5 mS/cm or less.

**16.** A wiping method comprising:

determining viscosity of liquid adhering to a nozzle surface of a head; and
wiping the liquid adhering to the nozzle surface by a wiper that comes into contact with the nozzle surface and moves relative to the head, wherein
in a case in which the determined viscosity is lower than first viscosity indicating that the liquid is substantially solidified, a pressing pressure when the wiper comes into contact with the nozzle surface in wiping is larger than a stress due to viscous friction of the liquid on the nozzle surface.

**17.** The wiping method according to claim 16, further comprising:

determining an adhesive force of the liquid adhering to the nozzle surface in a case in which the determined viscosity is equal to or higher than the first viscosity, wherein
when the determined adhesive force is less than a first adhesive force which is the same value as a maximum force applied from the wiper to the liquid, the pressing pressure in wiping is larger than the determined adhesive force.

**18.** The wiping method according to claim 17, further comprising activating a notification device when the determined adhesive force is equal to or larger than the first adhesive force.

**19.** The wiping method according to claim 16, wherein
determining viscosity comprises:

determining an evaporation rate of the liquid adhering to the nozzle surface based on at least elapsed time from execution of wiping in which the wiper comes into contact with the nozzle surface and moves relative to the head, liquid information on the liquid discharged by the head, and environment information on an environment of the head; and
determining the viscosity of the liquid adhering to the nozzle surface based on the determined evaporation rate.

**20.** The wiping method according to claim 16, further comprising activating a notification device, wherein activating comprises:

determining the stress due to the viscous friction of the liquid in a shear flow generated in the liquid by the relatively moving wiper, based on the determined viscosity; and
actuating a notification device in a case in which the determined stress due to the viscous friction is larger than the pressing pressure.

**21.** The wiping method according to claim 20, wherein
activating further comprises:

determining a maximum moving speed of the wiper when a workload of the stress due to the viscous friction and a workload of a surface tension of the liquid generated in the liquid by the relatively moving wiper are balanced, in a case in which the determined stress due to the viscous friction is less than the pressing pressure; and
actuating the notification device when the determined maximum moving speed is less than a predetermined moving speed at which the head and the wiper are relatively moved in wiping.

**22.** The wiping method according to claim 16, further comprising determining the pressing pressure based on wiper information on the wiper.

23. The wiping method according to claim 19, wherein the adhesive force of the liquid adhering to the nozzle surface is determined based on the determined evaporation rate.

24. The wiping method according to claim 19, wherein the pressing pressure is increased as the elapsed time increases.

25. The wiping method according to claim 24, wherein the pressing pressure is increased by changing a position of the wiper relative to the nozzle surface in an up-down direction.

26. The wiping method according to any one of claims 16 to 25, wherein the liquid is water based ink comprising a pigment and a water-soluble organic solvent.

27. A wiping method, comprising:

wiping liquid adhering to a nozzle surface of a head with a wiper that comes into contact with the nozzle surface, wherein
the liquid comprises a pigment and a water-soluble organic solvent, having a mass ratio of the water-soluble organic solvent to a solid component in the liquid (water-soluble organic solvent/solid component) of 2.0 or more, the water-soluble organic solvent has a saturated vapor pressure of 20 Pa or less at 20°C,
when an aqueous solution having a content of the solid component of 10 wt% is prepared, conductivity of the aqueous solution is 5 mS/cm or less,
a pressing pressure when the wiper comes into contact with the nozzle surface in wiping is larger than a stress due to viscous friction of the liquid, and
viscosity of the liquid on the nozzle surface is less than first viscosity indicating that the liquid is substantially solidified.

*FIG.1*

FIG.2

## FIG.3

FIG.4

EP 4 509 318 A1

## FIG.5

```
                    START
                      │
                      ▼            ┌─S1
          ASSUME WIPING PROCESS
          UNDER DEFAULT CONDITIONS
                      │
                      ▼            ┌─S2
          ESTIMATION PROCESS
                      │
                      ▼            ┌─S3
              RESULT IS GOOD? ──────────────────────────┐
             Yes                              No         │
                      │                                  ▼            ┌─S5
                      ▼            ┌─S4             CHANGE TO Vmin
        CONDITIONS ARE DETERMINED                       │
        AND WIPING PROCESS IS EXECUTED                  ▼            ┌─S6
                      │                           ESTIMATION PROCESS
                      ▼                                  │
                    END                                  ▼            ┌─S7
                                          ┌──────  RESULT IS GOOD?
                                          No        Yes
                      ┌───────────────────┘           │
                      ▼            ┌─S9                ▼            ┌─S8
              CHANGE TO Pmax                  CONDITIONS ARE DETERMINED
                      │                       AND WIPING PROCESS IS EXECUTED
                      ▼            ┌─S10               │
          ESTIMATION PROCESS                          ▼
                      │                              END
                      ▼            ┌─S11
              RESULT IS GOOD? ──────────────────────────┐
             Yes                              No         │
                      │                                  ▼            ┌─S13
                      ▼            ┌─S12           CHANGE TO Tmin
        CONDITIONS ARE DETERMINED                       │
        AND WIPING PROCESS IS EXECUTED                  ▼            ┌─S14
                      │                       CONDITIONS ARE DETERMINED
                      ▼                       AND WIPING PROCESS IS EXECUTED
                    END                                  │    ◄───── (A)
                                                         ▼
                                                       END
```

## FIG.6

```
                        ┌──────────────┐
                        │    START     │
                        └──────┬───────┘
                               │           ⌐S21
                        ┌──────▼───────┐
                        │  CALCULATE   │
                        │ EVAPORATION  │
                        │   RATE E     │
                        └──────┬───────┘
                               │           ⌐S22
                        ┌──────▼───────┐
                        │ CALCULATE INK│
                        │  VISCOSITY η │
                        └──────┬───────┘
                               │           ⌐S23
                        ╱──────▼──────╲
                 Yes   ╱ INK VISCOSITY η <╲
          ┌───────────▢  FIRST VISCOSITY? ▢
          │            ╲              ╱
   S29    │             ╲────┬───────╱
    ╱─────▼─────╲            │ No
   ╱  Fwipe>Fink? ╲          │
Yes╲             ╱          ▼           ⌐S24
┌───╲           ╱      ╱─────────╲
│    ╲────┬────╱      ╱   Fink <   ╲  No
│         │ No       ▢FIRST ADHESIVE▢──────┐
│         │          ╲   FORCE?    ╱       │
│     ┌───▼──────┐    ╲───┬───────╱        │       ⌐S25
│     │  DISPLAY │ S30    │ Yes            │  ┌──────────────┐
│     │ABNORMALITY│        │               │  │   DISPLAY    │
│     └───┬──────┘         │               │  │  ABNORMALITY │
│         │               │                │  └──────┬───────┘
│       ( A )             │                │         │
│                         │                │       ( A )
│   S31                   │           ⌐S26
╱───▼────╲          ╱─────▼─────╲
╱ V≤Vmax? ╲  No     ╱  Fwipe>Fink? ╲  Yes
╲         ╱────┐   ╲             ╱─────┐
╲───┬────╱     │    ╲────┬──────╱      │
    │ Yes      │         │ No          │
┌───▼──────┐   │   ┌─────▼──────┐   ┌──▼─────────┐
│DETERMINATION3│ S32│DETERMINATION2│S28│DETERMINATION1│S27
│(RESULT IS GOOD)│   │(RESULT IS POOR)│  │(RESULT IS GOOD)│
└──────────┘   │   └─────┬──────┘   └──┬─────────┘
               │         │             │
        ┌──────▼──────┐  │             │
        │   DISPLAY   │S33│             │
        │ ABNORMALITY │   │             │
        └──────┬──────┘   │             │
             ( A )        │             │
                          │             │
                      ┌───▼─────────────▼──┐
                      │       END          │
                      └────────────────────┘
```

# FIG.7

DISPLACEMENT AMOUNT δ

Fink

Fwipe

33A

θ

L

t

73

74

72

UP

1

LEFT ← → RIGHT

DOWN 3

FIG.8

$\theta_E$    $\theta_E$    33A    111    Fink    $\theta_E$    $\theta$    $\theta_A$    $\theta_D$    72A    51    L1    L1    L1    73

UP
1
LEFT ←→ RIGHT
DOWN
3

EP 4 509 318 A1

## EUROPEAN SEARCH REPORT

**Application Number**

EP 24 19 3223

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/100938 A1 (MUTO ATSUSHI [JP]) 13 April 2017 (2017-04-13) | 1-3,5-7, 16-18, 20-22 | INV. B41J2/165 |
| Y | * the whole document * | 11-15, 26,27 | |
| A | | 4,8-10, 19,23-25 | |
| | ----- | | |
| Y | JP 5 900840 B2 (SEIKO EPSON CORP) 6 April 2016 (2016-04-06) * the whole document * | 11-15, 26,27 | |
| | ----- | | |

**TECHNICAL FIELDS SEARCHED (IPC)**

B41J

The present search report has been drawn up for all claims

| Place of search | Date of completion of the search | Examiner |
|---|---|---|
| The Hague | 16 December 2024 | Dewaele, Karl |

## ANNEX TO THE EUROPEAN SEARCH REPORT
## ON EUROPEAN PATENT APPLICATION NO.

EP 24 19 3223

This annex lists the patent family members relating to the patent documents cited in the above-mentioned European search report.
The members are as contained in the European Patent Office EDP file on
The European Patent Office is in no way liable for these particulars which are merely given for the purpose of information.

16-12-2024

| Patent document cited in search report | Publication date | Patent family member(s) | | Publication date |
|---|---|---|---|---|
| US 2017100938 A1 | 13-04-2017 | CN | 106564282 A | 19-04-2017 |
| | | JP | 6700576 B2 | 27-05-2020 |
| | | JP | 2017071200 A | 13-04-2017 |
| | | US | 2017100938 A1 | 13-04-2017 |
| JP 5900840 B2 | 06-04-2016 | JP | 5900840 B2 | 06-04-2016 |
| | | JP | 2015061765 A | 02-04-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023133419 A